# EUROPEAN PATENT APPLICATION

(11) **EP 2 360 634 A1**
(43) Date of publication of application: **24.08.2011**
(21) Application number: 10154588.7
(22) Date of filing: 24.02.2010
(51) Int. Cl.: G06Q 30/00

(54) **System and method for displaying an advertisement on a mobile device**

(71) Applicant: RESEARCH IN MOTION LIMITED, Waterloo, Ontario N2L 3W8 (CA)
(72) Inventor: Garg, Neeraj, Waterloo Ontario N2L 5Z5 (CA)
(74) Representative: Rickard, David John

(57) **Abstract**

A system and method are provided to access advertisements on a mobile device. One or more merchants are provided as entries on a contact list. When one or more new advertisements are available from the merchants, a new occurrence indicator is displayed on the contact list icon on the home screen of the mobile device. Upon the mobile device receiving an input to open the contact list application that is associated with the contact list icon, the mobile device will display the contact list including the merchants listed therein. A new advertisement indicator associated with certain of the merchants notifies the user which merchants have new advertisements. Upon the mobile device receiving an input associated with one of merchants, an advertising display is presented showing the advertisement originating from the selected one of the merchants.

## Description

The following relates generally to systems and methods for displaying an advertisement on a mobile device.

The relevancy of advertising may depend on the perspective of the user. Conventional advertising methods include billboards, flyers that are mailed, and flyers found at stores. Some advertising may also be emailed to a user or displayed on banner advertisements on a website. Such advertisements may be considered an annoyance or may be welcomed depending on the perspective of the user.

### GENERAL

There may be provided a system and method for obtaining one or more advertisements on a mobile device. The one or more advertisements may be associated with a merchant. Upon receiving an input to add the merchant to a contact list, the merchant may be added as an entry on the contact list. A graphical user interface (GUI) that is associated with obtaining the one or more advertisements may be displayed. The GUI may comprise controls for allowing a user to enable the receipt of the one or more advertisements according to one or more pre-determined criteria, and for allowing the user to disable the receipt of the one or more advertisements. Then, upon receiving a selection input associated with the GUI, the mobile device may be enabled to receive the one or more advertisements associated with the merchant.

Typically, advertisements are displayed to users under conditions (e.g. times, type of advertisements) that are determined by an advertiser. In particular, advertisements are displayed at times when the user may not wish to view them. It has been found that providing a user with more control over when advertisements are displayed, how advertisements are displayed, what content advertisements include, and from where advertisements originate, can increase the relevancy of advertisement according to the user's perspective. Therefore, a system and method are provided for obtaining one or more advertisements on a mobile device. The one or more advertisements are associated with a merchant. The merchant may have an associated entry on a contact list. A GUI that is associated with obtaining the one or more advertisements is presented to the user, so that the user may enter selections as to enable the receipt of advertisements according to pre-determined criteria, or to disable the receipt of the advertisements.

In another aspect, a system and method may be provided to display advertisements on a mobile device, wherein upon detecting a new advertisement from a merchant, on a contact list comprising at least an entry associated with the merchant, a new advertisement indicator is displayed in association with the entry that is associated with the merchant. Upon receiving a selection input associated with the entry associated with the merchant, an advertisement associated with the merchant is displayed. In another aspect, upon detecting the new advertisement from the merchant, a new occurrence indicator may be displayed in association with a contact list icon on a home screen, so that upon receiving a selection input associated with the contact list icon, the contact list is displayed.

Generally, one or more merchants may be provided as contacts on a contact list. When one or more new advertisements are available from the one or more merchants, a new occurrence indicator may be displayed on the contact list icon on the home screen of the mobile device. Upon the mobile device receiving a user's selection input to open the contact list application that is associated with the contact list icon, the mobile device may display the contact list including the one or more merchants listed therein. A new advertisement indicator associated with certain of the one or more merchants may notify the user which merchants have new advertisements. Upon the mobile device receiving a user's selection input associated with one of the one or more merchants, an advertising display may be presented showing the advertisement from the selected one of the one or more merchants. In this way, at the leisure or at the desire of the user, the user can control when to view the advertisements, as well as from which merchants.

The method and system for accessing the advertisements on the mobile device may also provide for advertisement settings that allow a user to control from which merchants advertisements are received, the location from where the advertisements are applicable, the frequency at which new advertisements should be obtained, and the categories of products or services that should be included in the advertisements. As will be explained in greater detail below, the different settings for the advertisements can be controlled by the user.

For clarity of terminology, the term advertisement herein means flyers, notices, sales, coupons, etc. for advertising products or services, or both. The term merchants herein means stores, people, or organizations that sell or provide products or services, or both. The term contacts herein means persons or organizations comprising at least one of a name, phone number, postal address, email address, or instant messaging identification. The term contact list herein means a listing of contacts or merchants or both. The term contact list may also be referred to as an address book, phone book, buddy list, etc.

The embodiments described herein generally relate to a mobile wireless communication device, hereafter referred to as a mobile device, which can be configured according to an IT policy. It should be noted that the term IT policy, in general, refers to a collection of IT policy rules, in which the IT policy rules can be defined as being either grouped or non-grouped and global or per-user. The terms grouped, non-grouped, global and per-user are defined further below. Examples of applicable communication devices include pagers, cellular phones, cellular smart-phones, wireless organizers, personal digital assistants, computers, laptops, handheld wireless communication devices, wirelessly enabled notebook computers and the like.

The mobile device can be a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities).

### BRIEF DESCRIPTION OF THE DRAWINGS

For a better understanding of the various example embodiments described herein and to show more clearly how they may be carried into effect, reference will now be made, by way of example only, to the accompanying drawings which show at least one example embodiment and in which:

FIG. 1 is a block diagram of an example embodiment of a mobile device;

FIG. 2 is a block diagram of an example embodiment of a communication subsystem component of the mobile device of FIG. 1;

FIG. 3 is an example block diagram of a node of a wireless network;

FIG. 4 is a block diagram illustrating components of a host system in one example configuration for use with the wireless network of FIG. 3 and the mobile device of FIG. 1;

FIG. 5 is a block diagram illustrating example ones of the other software components of FIG. 1;

FIG. 6 is a flow chart illustrating example computer executable instructions for obtaining advertisements on the mobile device;

FIG. 7 is a block diagram illustrating example data on the advertisement server of FIG. 6;

FIG. 8 is a flow chart illustrating another example of computer executable instructions for obtaining advertisements on the mobile device;

FIG. 9 is a screen shot of an example home screen displayed by the mobile device;

FIG. 10 is a screen shot of an example contact list managed by the contact list application of FIG. 5;

FIG. 11 is a screen shot of an example advertisement settings display managed by the advertisement application of FIG. 5;

FIG. 12 is a screen shot of an example scheduling display managed by the advertisement application of FIG. 5;

FIG. 13 is a screen shot of an example location settings display managed by the advertisement application of FIG. 5;

FIG. 14 is a screen shot of another example contact list managed by the contact list application of FIG. 5;

FIG. 15 is a screen shot of an example advertisement settings display for all merchants managed by the advertisement application of FIG. 5;

FIG. 16 is a screen shot of an example advertisement display managed by the advertisement application of FIG. 5;

FIG. 17 is a screen shot of the advertisement display of FIG. 13 with the link option selected;

FIG. 18 is a flow chart illustrating example computer executable instructions for accessing and displaying advertisements on the mobile device using the displays managed by the contact list application and the advertisement application; and,

FIG. 19 is a flow chart illustrating another example of computer executable instructions for accessing and displaying advertisements on the mobile device.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that the embodiments described herein may be practiced without these specific details. In other instances, well-known methods, procedures and components have not been described in detail so as not to obscure the example embodiments described herein. Also, the description is not to be considered as limiting the scope of the example embodiments described herein.

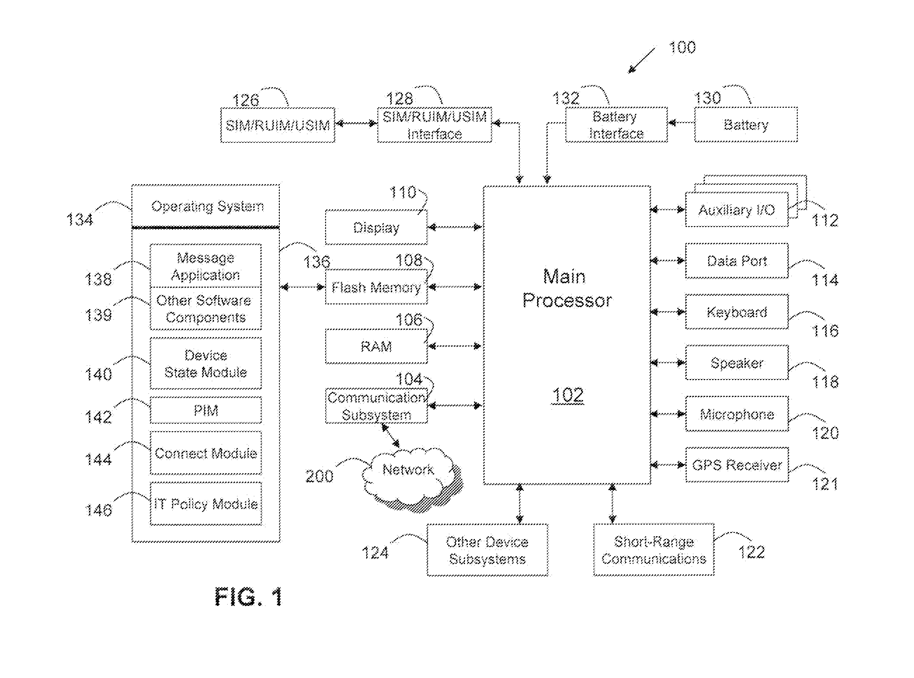

To aid the reader in understanding the structure of the mobile device and how it communicates with other devices and host systems, reference will now be made to FIGS. 1 through 4.

Referring first to FIG. 1, shown therein is a block diagram of an example embodiment of a mobile device 100. The mobile device 100 includes a number of components such as a main processor 102 that controls the overall operation of the mobile device 100. Communication functions, including data and voice communications, are performed through a communication subsystem 104. The communication subsystem 104 receives messages from and sends messages to a wireless network 200. In this example embodiment of the mobile device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the example embodiments described herein are intended to use any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with mobile device 100 is a GSM/GPRS wireless network in one example implementation, other wireless networks may also be associated with the mobile device 100 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, MobitexTM and DataTACTM network communication systems. Examples of other voice-centric data networks include Personal Communication Systems (PCS) networks like GSM and Time Division Multiple Access (TDMA) systems.

The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, short-range communications 122 and other device subsystems 124.

Some of the subsystems of the mobile device 100 perform communication-related functions, whereas other subsystems may provide "resident" or on-device functions. By way of example, the display 110 and the keyboard 116 may be used for both communication-related functions, such as entering a text message for transmission over the network 200, and device-resident functions such as a calculator or task list.

The mobile device 100 can send and receive communication signals over the wireless network 200 after required network registration or activation procedures have been completed. Network access is associated with a subscriber or user of the mobile device 100. To identify a subscriber, the mobile device 100 requires a SIM/RUIM card 126 (i.e. Subscriber identity Module or a Removable User identity Module) to be inserted into a SIM/RUIM interface 128 in order to communicate with a network. The SIM card or RUIM 126 is one type of a conventional "smart card" that can be used to identify a subscriber of the mobile device 100 and to personalize the mobile device 100, among other things. Without the SIM card 126, the mobile device 100 is not fully operational for communication with the wireless network 200. By inserting the SIM card/RUIM 126 into the SIM/RUIM interface 128, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM card/RUIM 126 includes a processor and memory for storing information. Once the SIM card/RUIM 126 is inserted into the SIM/RUIM interface 128, it is coupled to the main processor 102. In order to identify the subscriber, the SIM card/RUIM 126 can include some user parameters such as an International Mobile Subscriber identity (IMSI). An advantage of using the SIM card/RUIM 126 is that a subscriber is not necessarily bound by any single physical mobile device. The SIM card/RUIM 126 may store additional subscriber information for a mobile device as well, including datebook (or calendar) information and recent call information. Alternatively, user identification information can also be programmed into the flash memory 108.

The mobile device 100 is a battery-powered device and includes a battery interface 132 for receiving one or more rechargeable batteries 130. In at least some example embodiments, the battery 130 can be a smart battery with an embedded microprocessor. The battery interface 132 is coupled to a regulator (not shown), which assists the battery 130 in providing power V+ to the mobile device 100. Although current technology makes use of a battery, future technologies such as micro fuel cells may provide the power to the mobile device 100.

The mobile device 100 also includes an operating system 134 and software components 136 to 146 which are described in more detail below. The operating system 134 and the software components 136 to 146 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 146, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications, will normally be installed on the mobile device 100 during its manufacture. Other software applications include a message application 138 that can be any suitable software program that allows a user of the mobile device 100 to send and receive electronic messages. In addition to the message application 138, the software applications 136 may also include various other software components 139, some of which will be describe in greater detail below. Various alternatives exist for the message application 138 as is well known to those skilled in the art. Messages that have been sent or received by the user are typically stored in the flash memory 108 of the mobile device 100 or some other suitable storage element in the mobile device 100. In at least some example embodiments, some of the sent and received messages may be stored remotely from the device 100 such as in a data store of an associated host system that the mobile device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the mobile device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200. PIM data items may be seamlessly integrated, synchronized, and updated via the wireless network 200 with the mobile device subscriber's corresponding data items stored and/or associated with a host computer system. This functionality creates a mirrored host computer on the mobile device 100 with respect to such items. This can be particularly advantageous when the host computer system is the mobile device subscriber's office computer system.

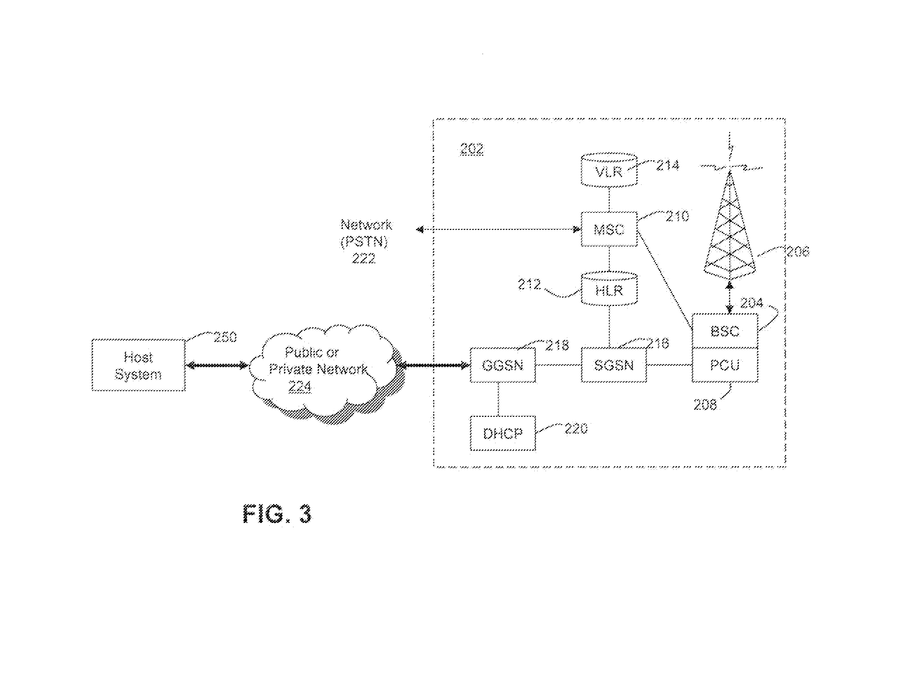

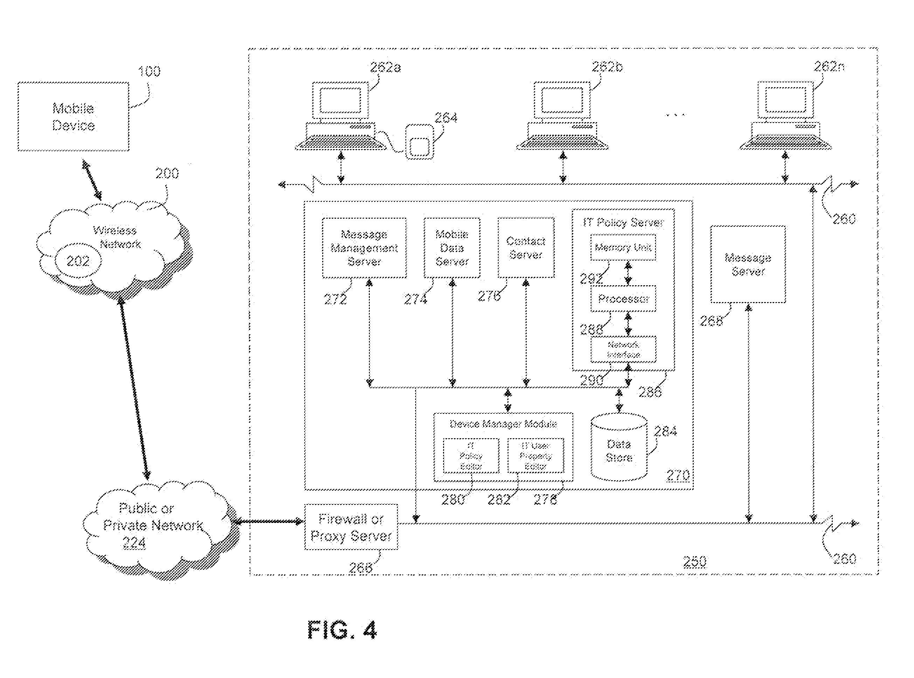

The mobile device 100 also includes a connect module 144, and an IT policy module 146. The connect module 144 implements the communication protocols that are required for the mobile device 100 to communicate with the wireless infrastructure and any host system, such as an enterprise system, that the mobile device 100 is authorized to interface with. Examples of a wireless infrastructure and an enterprise system are given in FIGS. 3 and 4, which are described in more detail below.

The connect module 144 includes a set of APIs that can be integrated with the mobile device 100 to allow the mobile device 100 to use any number of services associated with the enterprise system. The connect module 144 allows the mobile device 100 to establish an end-to-end secure, authenticated communication pipe with the host system. A subset of applications for which access is provided by the connect module 144 can be used to pass IT policy commands from the host system to the mobile device 100. This can be done in a wireless or wired manner. These instructions can then be passed to the IT policy module 146 to modify the configuration of the device 100. Alternatively, in some cases, the IT policy update can also be done over a wired connection.

The IT policy module 146 receives IT policy data that encodes the IT policy. The IT policy module 146 then ensures that the IT policy data is authenticated by the mobile device 100. The IT policy data can then be stored in the flash memory 106 in its native form. After the IT policy data is stored, a global notification can be sent by the IT policy module 146 to all of the applications residing on the mobile device 100. Applications for which the IT policy may be applicable then respond by reading the IT policy data to look for IT policy rules that are applicable.

The IT policy module 146 can include a parser (not shown), which can be used by the applications to read the IT policy rules. In some cases, another module or application can provide the parser. Grouped IT policy rules, described in more detail below, are retrieved as byte streams, which are then sent (recursively, in a sense) into the parser to determine the values of each IT policy rule defined within the grouped IT policy rule. In at least some example embodiments, the IT policy module 146 can determine which applications are affected by the IT policy data and send a notification to only those applications. In either of these cases, for applications that aren't running at the time of the notification, the applications can call the parser or the IT policy module 146 when they are executed to determine if there are any relevant IT policy rules in the newly received IT policy data.

All applications that support rules in the IT Policy are coded to know the type of data to expect. For example, the value that is set for the "WEP User Name" IT policy rule is known to be a string; therefore the value in the IT policy data that corresponds to this rule is interpreted as a string. As another example, the setting for the "Set Maximum Password Attempts" IT policy rule is known to be an integer, and therefore the value in the IT policy data that corresponds to this rule is interpreted as such.

After the IT policy rules have been applied to the applicable applications or configuration files, the IT policy module 146 sends an acknowledgement back to the host system to indicate that the IT policy data was received and successfully applied.

Other types of software applications can also be installed on the mobile device 100. These software applications can be third party applications, which are added after the manufacture of the mobile device 100. Examples of third party applications include games, calculators, utilities, etc.

The additional applications can be loaded onto the mobile device 100 through at least one of the wireless network 200, the auxiliary I/O subsystem 112, the data port 114, the short-range communications subsystem 122, or any other suitable device subsystem 124. This flexibility in application installation increases the functionality of the mobile device 100 and may provide enhanced on-device functions, communication-related functions, or both. For example, secure communication applications may enable electronic commerce functions and other such financial transactions to be performed using the mobile device 100.

The data port 114 enables a subscriber to set preferences through an external device or software application and extends the capabilities of the mobile device 100 by providing for information or software downloads to the mobile device 100 other than through a wireless communication network. The alternate download path may, for example, be used to load an encryption key onto the mobile device 100 through a direct and thus reliable and trusted connection to provide secure device communication.

The data port 114 can be any suitable port that enables data communication between the mobile device 100 and another computing device. The data port 114 can be a serial or a parallel port. In some instances, the data port 114 can be a USB port that includes data lines for data transfer and a supply line that can provide a charging current to charge the battery 130 of the mobile device 100.

The short-range communications subsystem 122 provides for communication between the mobile device 100 and different systems or devices, without the use of the wireless network 200. For example, the subsystem 122 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber may also compose data items, such as e-mail messages, for example, using the keyboard 116 in conjunction with the display 110 and possibly the auxiliary I/O subsystem 112. The auxiliary subsystem 112 may include devices such as: a touch screen, mouse, track ball, infrared fingerprint detector, or a roller wheel with dynamic button pressing capability. The keyboard 116 is preferably an alphanumeric keyboard and/or telephone-type keypad. However, other types of keyboards may also be used. A composed item may be transmitted over the wireless network 200 through the communication subsystem 104.

For voice communications, the overall operation of the mobile device 100 is substantially similar, except that the received signals are output to the speaker 118, and signals for transmission are generated by the microphone 120. Alternative voice or audio I/O subsystems, such as a voice message recording subsystem, can also be implemented on the mobile device 100. Although voice or audio signal output is accomplished primarily through the speaker 118, the display 110 can also be used to provide additional information such as the identity of a calling party, duration of a voice call, or other voice call related information.

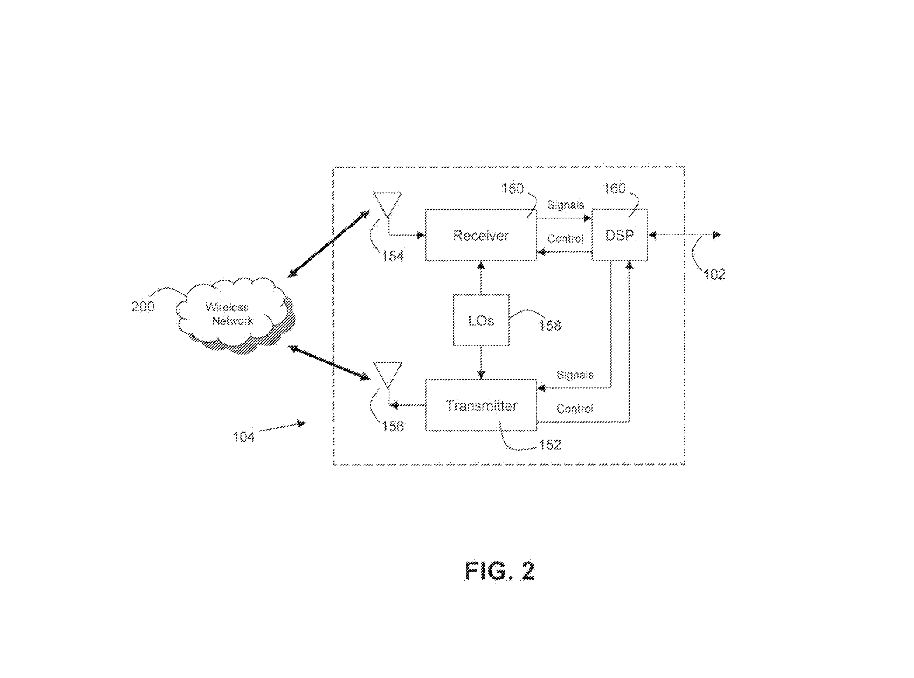

Referring now to FIG. 2, an example block diagram of the communication subsystem component 104 is shown. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the mobile device 100 is intended to operate. Thus, it should be understood that the design illustrated in FIG. 2 serves only as one example.

Signals received by the antenna 154 through the wireless network 200 are input to the receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 may be adaptively controlled through automatic gain control algorithms implemented in the DSP 160.

The wireless link between the mobile device 100 and the wireless network 200 can contain one or more different channels, typically different RF channels, and associated protocols used between the mobile device 100 and the wireless network 200. An RF channel is a limited resource that must be conserved, typically due to limits in overall bandwidth and limited battery power of the mobile device 100.

When the mobile device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

Referring now to FIG. 3, a block diagram of an example implementation of a node 202 of the wireless network 200 is shown. In practice, the wireless network 200 includes one or more nodes 202. In conjunction with the connect module 144, the mobile device 100 can communicate with the node 202 within the wireless network 200. In the example implementation of FIG. 3, the node 202 is configured in accordance with General Packet Radio Service (GPRS) and Global Systems for Mobile (GSM) technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a public or private network (Internet) 224 (also referred to herein generally as a shared network infrastructure) represents the data path for GPRS capable mobile devices. In a GSM network extended with GPRS capabilities, the BSC 204 also contains the Packet Control Unit (PCU) 208 that connects to the SGSN 216 to control segmentation, radio channel allocation and to satisfy packet switched requirements. To track the location of the mobile device 100 and availability for both circuit switched and packet switched management, the HLR 212 is shared between the MSC 210 and the SGSN 216. Access to the VLR 214 is controlled by the MSC 210.

The station 206 is a fixed transceiver station and together with the BSC 204 form fixed transceiver equipment. The fixed transceiver equipment provides wireless network coverage for a particular coverage area commonly referred to as a "cell". The fixed transceiver equipment transmits communication signals to and receives communication signals from mobile devices within its cell via the station 206. The fixed transceiver equipment normally performs such functions as modulation and possibly encoding and/or encryption of signals to be transmitted to the mobile device 100 in accordance with particular, usually predetermined, communication protocols and parameters, under control of its controller. The fixed transceiver equipment similarly demodulates and possibly decodes and decrypts, if necessary, any communication signals received from the mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in the HLR 212. The HLR 212 also contains location information for each registered mobile device and can be queried to determine the current location of a mobile device. The MSC 210 is responsible for a group of location areas and stores the data of the mobile devices currently in its area of responsibility in the VLR 214. Further, the VLR 214 also contains information on mobile devices that are visiting other networks. The information in the VLR 214 includes part of the permanent mobile device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each mobile device 100. The SGSN 216 also performs security functions and access control for data traffic on the wireless network 200. The GGSN 218 provides internetworking connections with external packet switched networks and connects to one or more SGSN's 216 via an Internet Protocol (IP) backbone network operated within the network 200. During normal operations, a given mobile device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server 220 connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a mobile device 100, through the PCU 208, and the SGSN 216 to an Access Point Node (APN) within the GGSN 218. The APN represents a logical end of an IP tunnel that can either access direct Internet compatible services or private network connections. The APN also represents a security mechanism for the network 200, insofar as each mobile device 100 must be assigned to one or more APNs and mobile devices 100 cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a mobile device 100 is not using its PDP Context, the PDP Context can be de-allocated and the IP address returned to the IP address pool managed by the DHCP server 220.

Referring now to FIG. 4, shown therein is a block diagram illustrating components of an example configuration of a host system 250 that the mobile device 100 can communicate with in conjunction with the connect module 144. The host system 250 will typically be a corporate enterprise or other local area network (LAN), but may also be a home office computer or some other private system, for example, in variant implementations. In this example shown in FIG. 4, the host system 250 is depicted as a LAN of an organization to which a user of the mobile device 100 belongs. Typically, a plurality of mobile devices can communicate wirelessly with the host system 250 through one or more nodes 202 of the wireless network 200.

The host system 250 includes a number of network components connected to each other by a network 260. For instance, a user's desktop computer 262a with an accompanying cradle 264 for the user's mobile device 100 is situated on a LAN connection. The cradle 264 for the mobile device 100 can be coupled to the computer 262a by a serial or a Universal Serial Bus (USB) connection, for example. Other user computers 262b-262n are also situated on the network 260, and each may or may not be equipped with an accompanying cradle 264. The cradle 264 facilitates the loading of information (e.g. PIM data, private symmetric encryption keys to facilitate secure communications) from the user computer 262a to the mobile device 100, and may be particularly useful for bulk information updates often performed in initializing the mobile device 100 for use. The information downloaded to the mobile device 100 may include certificates used in the exchange of messages.

It will be understood by persons skilled in the art that the user computers 262a-262n will typically also be connected to other peripheral devices, such as printers, etc. which are not explicitly shown in FIG. 4. Furthermore, only a subset of network components of the host system 250 are shown in FIG. 4 for ease of exposition, and it will be understood by persons skilled in the art that the host system 250 will include additional components that are not explicitly shown in FIG. 4 for this example configuration. More generally, the host system 250 may represent a smaller part of a larger network (not shown) of the organization, and may include different components and/or be arranged in different topologies than that shown in the example embodiment of FIG. 4.

To facilitate the operation of the mobile device 100 and the wireless communication of messages and message-related data between the mobile device 100 and components of the host system 250, a number of wireless communication support components 270 can be provided. In some implementations, the wireless communication support components 270 can include a message management server 272, a mobile data server 274, a contact server 276, and a device manager module 278. The device manager module 278 includes an IT Policy editor 280 and an IT user property editor 282, as well as other software components for allowing an IT administrator to configure the mobile devices 100. In an alternative example, there may be one editor that provides the functionality of both the IT policy editor 280 and the IT user property editor 282. The support components 270 also include a data store 284, and an IT policy server 286. The IT policy server 286 includes a processor 288, a network interface 290 and a memory unit 292. The processor 288 controls the operation of the IT policy server 286 and executes functions related to the standardized IT policy as described below. The network interface 290 allows the IT policy server 286 to communicate with the various components of the host system 250 and the mobile devices 100. The memory unit 292 can store functions used in implementing the IT policy as well as related data. Those skilled in the art know how to implement these various components. Other components may also be included as is well known to those skilled in the art. Further, in some implementations, the data store 284 can be part of any one of the servers.

In this example embodiment, the mobile device 100 communicates with the host system 250 through node 202 of the wireless network 200 and a shared network infrastructure 224 such as a service provider network or the public Internet. Access to the host system 250 may be provided through one or more routers (not shown), and computing devices of the host system 250 may operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the mobile device 100. The wireless VPN router allows a VPN connection to be established directly through a specific wireless network to the mobile device 100. The wireless VPN router can be used with the Internet Protocol (IP) Version 6 (IPV6) and IP-based wireless networks. This protocol can provide enough IP addresses so that each mobile device has a dedicated IP address, making it possible to push information to a mobile device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the mobile device 100 in this alternative implementation.

Messages intended for a user of the mobile device 100 are initially received by a message server 268 of the host system 250. Such messages may originate from any number of sources. For instance, a message may have been sent by a sender from the computer 262b within the host system 250, from a different mobile device (not shown) connected to the wireless network 200 or a different wireless network, or from a different computing device, or other device capable of sending messages, via the shared network infrastructure 224, possibly through an application service provider (ASP) or Internet service provider (ISP), for example.

The message server 268 typically acts as the primary interface for the exchange of messages, particularly e-mail messages, within the organization and over the shared network infrastructure 224. Each user in the organization that has been set up to send and receive messages is typically associated with a user account managed by the message server 268. Some example implementations of the message server 268 include a Microsoft Exchange TM server, a Lotus DominoTM server, a Novell GroupwiseTM server, or another suitable mail server installed in a corporate environment. In some implementations, the host system 250 may comprise multiple message servers 268. The message server 268 may also be adapted to provide additional functions beyond message management, including the management of data associated with calendars and task lists, for example.

When messages are received by the message server 268, they are typically stored in a data store associated with the message server 268. In at least example embodiments, the data store may be a separate hardware unit, such as data store 284, that the message server 268 communicates with. Messages can be subsequently retrieved and delivered to users by accessing the message server 268. For instance, an e-mail client application operating on a user's computer 262a may request the e-mail messages associated with that user's account stored on the data store associated with the message server 268. These messages are then retrieved from the data store and stored locally on the computer 262a. The data store associated with the message server 268 can store copies of each message that is locally stored on the mobile device 100. Alternatively, the data store associated with the message server 268 can store all of the messages for the user of the mobile device 100 and only a smaller number of messages can be stored on the mobile device 100 to conserve memory. For instance, the most recent messages (i.e. those received in the past two to three months for example) can be stored on the mobile device 100.

When operating the mobile device 100, the user may wish to have e-mail messages retrieved for delivery to the mobile device 100. The message application 138 operating on the mobile device 100 may also request messages associated with the user's account from the message server 268. The message application 138 may be configured (either by the user or by an administrator, possibly in accordance with an organization's information technology (IT) policy) to make this request at the direction of the user, at some pre-defined time interval, or upon the occurrence of some pre-defined event. In some implementations, the mobile device 100 is assigned its own e-mail address, and messages addressed specifically to the mobile device 100 are automatically redirected to the mobile device 100 as they are received by the message server 268.

The message management server 272 can be used to specifically provide support for the management of messages, such as e-mail messages, that are to be handled by mobile devices. Generally, while messages are still stored on the message server 268, the message management server 272 can be used to control when, if, and how messages are sent to the mobile device 100. The message management server 272 also facilitates the handling of messages composed on the mobile device 100, which are sent to the message server 268 for subsequent delivery.

For example, the message management server 272 may monitor the user's "mailbox" (e.g. the message store associated with the user's account on the message server 268) for new e-mail messages, and apply user-definable filters to new messages to determine if and how the messages are relayed to the user's mobile device 100. The message management server 272 may also compress and encrypt new messages (e.g. using an encryption technique such as Data Encryption Standard (DES), Triple DES, or Advanced Encryption Standard (AES)) and push them to the mobile device 100 via the shared network infrastructure 224 and the wireless network 200. The message management server 272 may also receive messages composed on the mobile device 100 (e.g. encrypted using Triple DES), decrypt and decompress the composed messages, re-format the composed messages if desired so that they will appear to have originated from the user's computer 262a, and re-route the composed messages to the message server 268 for delivery.

Certain properties or restrictions associated with messages that are to be sent from and/or received by the mobile device 100 can be defined (e.g. by an administrator in accordance with IT policy) and enforced by the message management server 272. These may include whether the mobile device 100 may receive encrypted and/or signed messages, minimum encryption key sizes, whether outgoing messages must be encrypted and/or signed, and whether copies of all secure messages sent from the mobile device 100 are to be sent to a pre-defined copy address, for example.

The message management server 272 may also be adapted to provide other control functions, such as only pushing certain message information or pre-defined portions (e.g. "blocks") of a message stored on the message server 268 to the mobile device 100. For example, in some cases, when a message is initially retrieved by the mobile device 100 from the message server 268, the message management server 272 may push only the first part of a message to the mobile device 100, with the part being of a pre-defined size (e.g. 2 KB). The user can then request that more of the message be delivered in similar-sized blocks by the message management server 272 to the mobile device 100, possibly up to a maximum pre-defined message size. Accordingly, the message management server 272 facilitates better control over the type of data and the amount of data that is communicated to the mobile device 100, and can help to minimize potential waste of bandwidth or other resources.

The mobile data server 274 encompasses any other server that stores information that is relevant to the corporation. The mobile data server 274 may include, but is not limited to, databases, online data document repositories, customer relationship management (CRM) systems, or enterprise resource planning (ERP) applications.

The contact server 276 can provide information for a list of contacts for the user in a similar fashion as the address book on the mobile device 100. Accordingly, for a given contact, the contact server 276 can include the name, phone number, work address and e-mail address of the contact, among other information. The contact server 276 can also provide a global address list that contains the contact information for all of the contacts associated with the host system 250.

It will be understood by persons skilled in the art that the message management server 272, the mobile data server 274, the contact server 276, the device manager module 278, the data store 284 and the IT policy server 286 do not need to be implemented on separate physical servers within the host system 250. For example, some or all of the functions associated with the message management server 272 may be integrated with the message server 268, or some other server in the host system 250. Alternatively, the host system 250 may include multiple message management servers 272, particularly in variant implementations where a large number of mobile devices need to be supported.

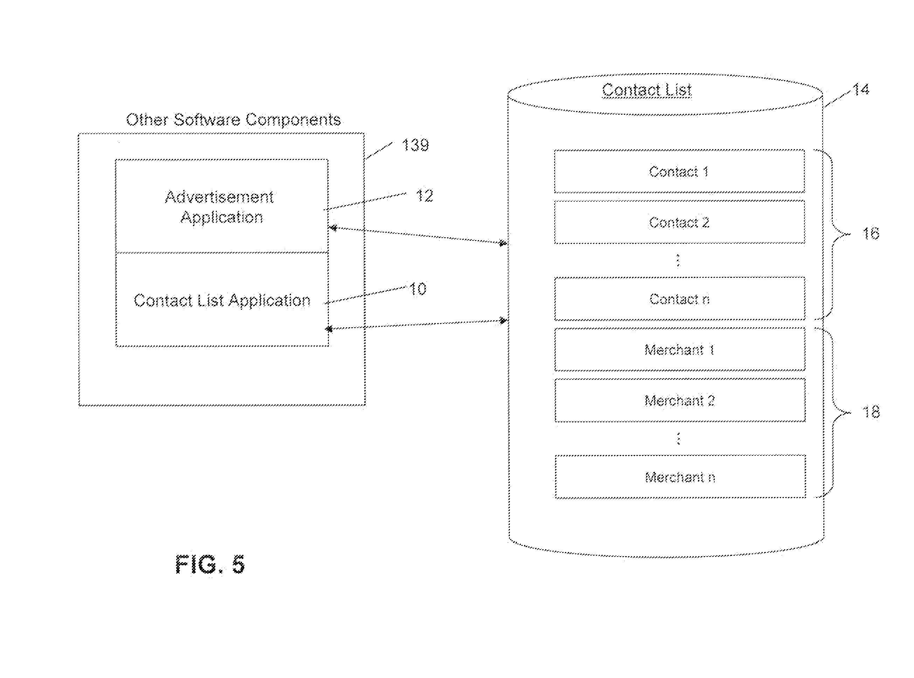

Alternatively, in some example embodiments, the IT policy server 286 can provide the IT policy editor 280, the IT user property editor 282 and the data store 284. In some cases, the IT policy server 286 can also provide the device manager module 278. The processor 288 of the IT policy server 286 can be used to perform the various steps of a method for providing IT policy data that is customizable on a per-user basis as explained further below and in conjunction with FIGS. 5 to 8. The processor 288 can execute the editors 280 and 282. In some cases, the functionality of the editors 280 and 282 can be provided by a single editor. In some cases, the memory unit 292 can provide the data store 284.

The device manager module 278 provides an IT administrator with a graphical user interface with which the IT administrator interacts to configure various settings for the mobile devices 100. As mentioned, the IT administrator can use IT policy rules to define behaviors of certain applications on the mobile device 100 that are permitted such as phone, web browser or Instant Messenger use. The IT policy rules can also be used to set specific values for configuration settings that an organization requires on the mobile devices 100 such as auto signature text, WLAN/VoIP/VPN configuration, security requirements (e.g. encryption algorithms, password rules, etc.), specifying themes or applications that are allowed to run on the mobile device 100, and the like.

Turning now to FIG. 5, example ones of the other software components 139 are shown. In this example, a contact list application 10 and an advertisement application 12 is provided. The advertisement application may be a part of or otherwise communicable with the contact list application 10. Both applications 10, 12 reside on the mobile device 100. The contact list application 10 manages and displays a user's contacts. Contacts may be names of persons or organizations and may have associated therewith contact information, such as telephone numbers, email addresses, postal addresses, work addresses, instant messaging identification, etc. A contact list application 10 may also be referred to as a phone book application, an address book application, and a buddy list application. The advertisement application 12 manages and displays advertisements from one or more merchants. It can be readily understood that each merchant may be associated therewith addresses, telephone numbers, websites, advertisements, etc.

Also shown in FIG. 5 is a contact list database 14 comprising a listing of one or more contacts 16 and a listing of one or more merchants 18. The listing of contacts 16 and the listing of merchants 18 may be grouped under one database as shown in FIG. 5, or may be grouped in separate databases. In either configuration, the advertisement application 12 and the contact list application 10 both have access to the listing of contacts 16 and the listing of merchants 18. The advertisement application 12 and the contact list application 10 operate together to display the contacts 16 and the merchants 18 in a unified contact list display on the display 110 of the mobile device 100. Merchants and contacts may be added to the unified contact list display and to the contact list database 14 based on user inputs. Further details regarding the advertisement application 12 and contact list application 10 are discussed below.

It will be appreciated that any application or module exemplified herein may include or otherwise have access to computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the mobile device 100 or accessible or connectable thereto. Any application or module herein described may be implemented using computer readable/executable instructions that may be stored or otherwise held by such computer readable media.

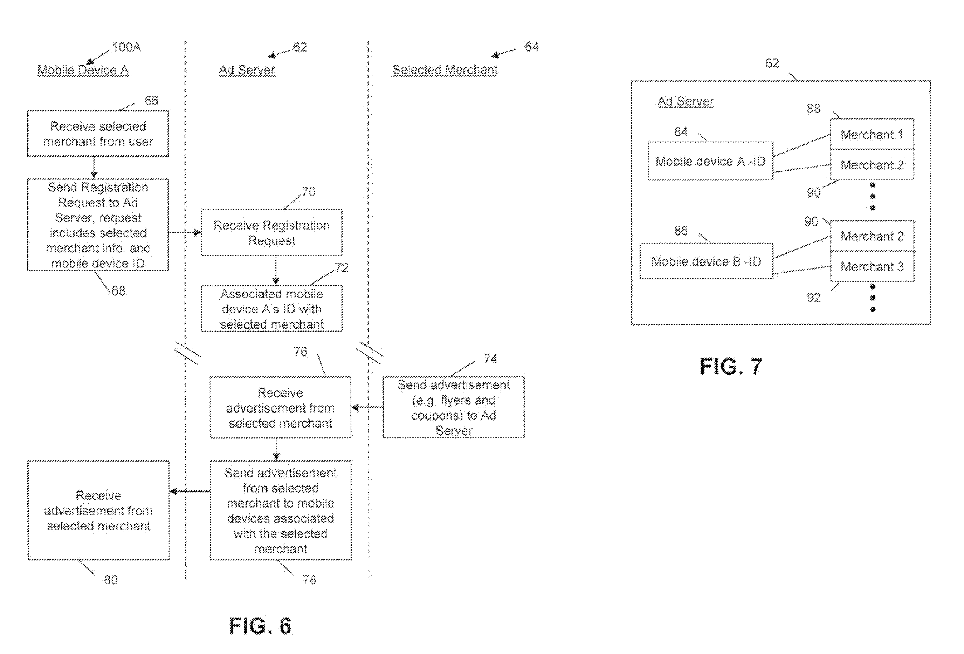

Turning to FIG. 6, an example of a 'push' method for obtaining advertisements on a mobile device 100 is provided. In one example configuration, a certain mobile device A 100A is in communication with an advertisement server 62, herein referred to as an ad server 62. For clarity of terminology, mobile device A is distinguished from other mobile devices 100 by the suffix 'A' to the reference numeral 100. The ad server 62 is in communication with one or more merchants. The ad server 62 generally obtains advertisements from the one or more merchants and sends the advertisements to one or more mobile devices 100.

In the push method, a mobile device 100 registers with the ad server 62 to receive advertisements from a selected merchant 64. When new advertisements become available on the ad server 62 from the selected merchant 64, or at predetermined intervals of time, or at some other predetermined condition (e.g. location of the user), then the ad server 62 will push or send the new advertisements to the mobile device 100.

In particular, at block 66, mobile device A 100A receives from the user a selected merchant, which the user wishes to add to a contact list on mobile device A 100A. At block 68, mobile device A 100A sends a registration request to the ad server 62, whereby the registration request includes the selected merchant's information and mobile device A's identification. The selected merchant's information may include the name of the merchant. Mobile device A's identification may include a phone number, a PIN, or an email address. It can be appreciated that any information suitable for the ad server 62 to identify the selected merchant 64 and any identification suitable for the ad server 62 to identify mobile device A 100A are applicable to the principles described herein. At block 70, the ad server 62 receives the registration request from mobile device A 100A. At block 72, the ad server 62 associates mobile device A's identification with the selected merchant, as part of the registration.

Continuing with FIG. 6, after mobile device A 100A has been registered at the ad server 62, mobile device A 100A may then be able to receive advertisements from the selected merchant 64. For example, at block 74, the selected merchant 64 sends one or more advertisements to the ad server 62. At block 76, the ad server 62 receives the advertisements and then, at block 78, sends the advertisements from the selected merchant to mobile devices 100 that are associated with the selected merchant. As per the registration described above, mobile device A 100A is associated with the selected merchant 64 and thus, the ad server 62 sends the advertisement to mobile device A 100A. At block 80, mobile device A receives the advertisement originating from the selected merchant 64.

FIG. 7 shows an example configuration of data within the ad server 62, that may be used for the push method described in FIG. 6. The ad server 62 may contain a listing of different mobile devices and their respective identifications (e.g. mobile device A's ID 84, mobile device B's ID 86). Associated with each mobile device identification are one or more merchants. In the example, merchant 1 88 and merchant 2 90 are both associated with mobile device A's ID 84. Merchant 2 90 and merchant 3 92 are both associated with mobile device B's ID 86. Thus, when an advertisement from merchant 2 90 is provided to the ad server 62, the advertisement is sent or pushed to both mobile device A and mobile device B.

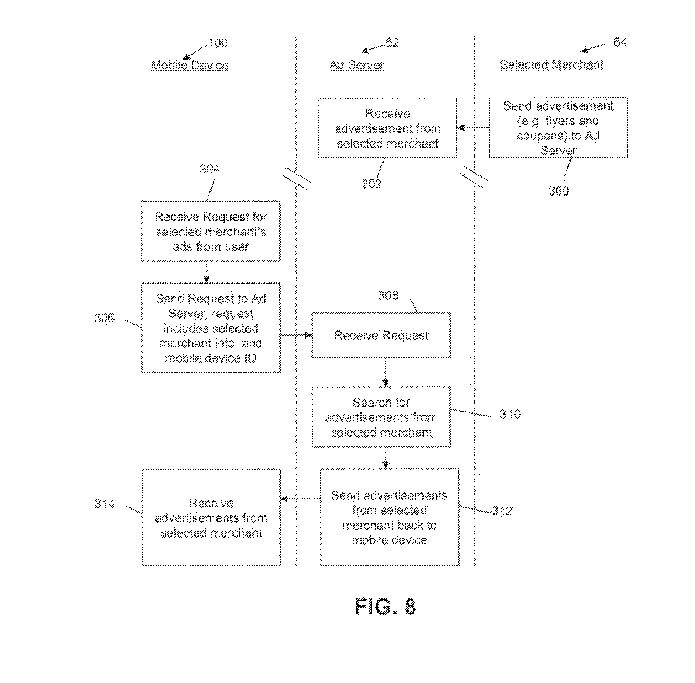

FIG. 8 shows an example of a "pull" method for a mobile device 100 to obtain advertisements. In a pull method, the mobile device 100 attempts to retrieve advertisements from the ad server 62 at desired times, regardless of whether or not there are new advertisements available from the selected merchant 64. At block 300, the selected merchant sends one or more advertisements to the ad server 62. The ad server 62 receives the one or more advertisements and stores them (block 302). The ad server 62 does not send the advertisements unless requested to do so. At block 304, the mobile device 100 receives from the user a request for the selected merchant's advertisements. At block 306, the mobile device 100 sends the request to the ad server 62. The request includes the selected merchant's information and the mobile device's identification. At block 308, the ad server 62 receives the request and then, at block 310, the ad server 62 searches for advertisements from the selected merchant 64. If there are advertisements available, the ad server 62 sends the advertisements to the mobile device 100 (block 312). The mobile device 100 then receives the advertisements that originated from the selected merchant 64 (block 314).

In other example embodiments, an ad server 62 is not used and merchants can transmit advertisements directly to a mobile device 100. It can be appreciated that there may be various different methods for a mobile device 100 to receive advertisements and that such methods are applicable to the principles described herein. It can also be appreciated that there are different methods for adding a selected merchant to a contact list.

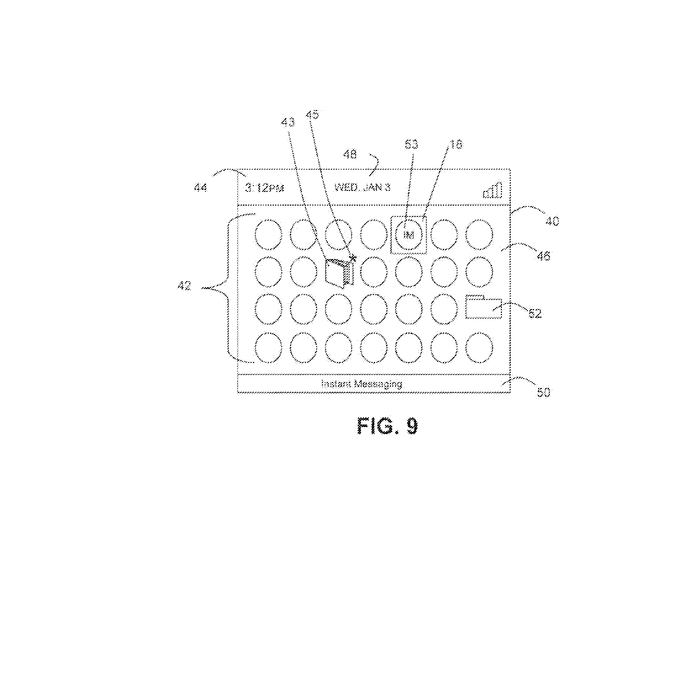

Turning now to FIGS. 9 to 17, a number of example display screens are displayed by either the advertisement application 12 or the contact list application 10, or both. These display screens may be presented on the mobile device's display 110.

In FIG. 9, the mobile device 100 may display a home screen 40, which may be the active screen when the mobile device 100 is powered up or may be accessible from other screens. The example of the home screen 40 generally includes a status region 44 and a theme background 46, which provides a graphical background for the display 12. The theme background 46 displays a series of icons 42 in a predefined arrangement on a graphical background. In some themes, the home screen 40 may limit the number of icons 42 shown on the home screen 40 so as to not detract from the theme background 46, particularly where the background 46 is chosen for aesthetic reasons. The theme background 46 shown in FIG. 9 provides a grid of icons. It will be appreciated that preferably several themes are available for the user to select and that any applicable arrangement may be used. One or more of the series of icons 42 is typically a folder 52 that itself is capable of organizing any number of applications therewithin.

The status region 44 in this example embodiment includes a date/time display 48. The theme background 46, in addition to a graphical background and the series of icons 42, also includes a status bar 50. The status bar 50 provides information to the user based on the location of the selection cursor 18, e.g. by displaying a name for the icon 53 that is currently highlighted.

An application, such as an instant messaging default manager or IM application, may be initiated (opened or viewed) from display 110 by highlighting a corresponding icon 53 using a positioning device (e.g. scroll wheel, touch screen display, scroll ball, and keyboard) and providing a suitable user input to the mobile device 100. For example, an instant messaging application may be initiated by moving the positioning device such that the icon 53 is highlighted by the selection box 18 as shown in FIG. 9, and providing a selection input, e.g. by pressing a scroll ball or touching a touch screen.

Also shown in FIG. 9 is a contact list application icon 43. By providing a selection input related to the contact list application icon 43, the contact list application 10 may be activated. The icon 43 may include a new occurrence indicator 45 to notify the user that a new event or new message has occurred. For example, if the mobile device 100 detects that there is a new message from a contact or if there is a new advertisement from a merchant, then the new occurrence indicator 45 will be displayed. In the example home screen 40, the new occurrence indicator 45 is an asterisk. It can be readily understood any indicator (e.g. graphical indicators, sound indicators, tactile indicators) that notifies the user that a new occurrence has taken place is applicable to the principles described herein.

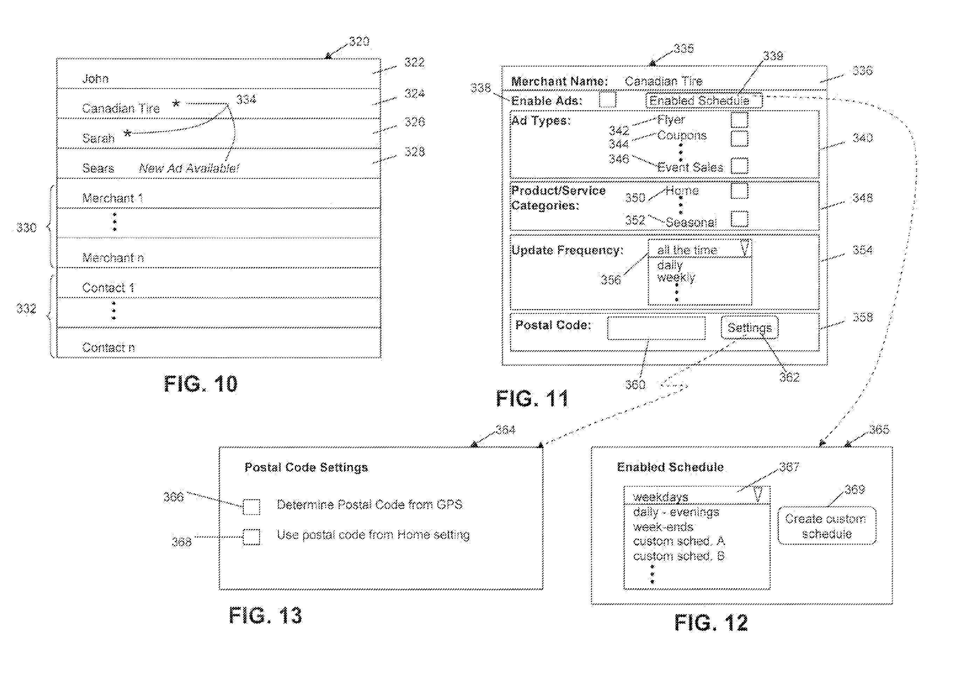

If the mobile device 100 receives a selection input to open or activate the contact list application 10 at the home screen 40, then the mobile device 100 will then display a contact list. Turning to FIG. 10, an example display of a contact list 320 is provided, whereby the contact list 320 is able to display entries of both contacts and merchants. Different segments of the contact list 320 represent entries for different contacts or different merchants. For example, there is a segment for the contact John 322, a segment for the merchant Canadian Tire 324, a segment for the contacts Sarah 326 and a segment for the merchant Sears 328. The entries of the contacts and the merchants may be combined and displayed in alphabetical order. Alternatively, the contact list 320 may display a group of merchants 330 and a group of contacts 332. The contacts and merchants displayed on the contact list 320 correspond to the listing of contacts 16 and listing of merchants 18 described above in the discussion of FIG. 5. In other words, the contact list application 10 accesses the listings 16, 18 to display the contacts and the merchants in the contact list 320.

Continuing with FIG. 10, if there is a new message from a contact, for example Sarah, then a new event indicator 334 is displayed in association with the contact (e.g. Sarah's segment 326). Similarly, if the mobile device 100 detects that there is a new advertisement from a merchant, for example Canadian Tire, then the new event indicator 334 is also displayed in association with the merchant (e.g. Canadian Tire's segment 328). The new event indicator 334 may not necessarily be an asterisk, as shown in relation to Canadian Tire and Sarah, but may include text, such as "New Ad Available!". Such text in the new event indicator 334 is shown in relation to Sears' segment 328. If the mobile device 100 receives a selection input for showing advertisements associated with a merchant, whereby the merchant is displayed as an entry on the contact list 320, then the mobile device 100 will display the corresponding advertisements using the advertisement application 12. Further details in this regard are described below.

It can be appreciated that a GUI on the mobile device 100 allows a user to customize advertisement settings associated with each merchant. These settings can be used to determine the conditions under which the mobile device 100 notifies the user that a new advertisement is available. An example of an advertisement settings display 335 is shown in FIG. 11. The advertisement application 12 manages the settings display 335 and holds the settings data. The settings display 335 is a GUI that shows the name 336 of the merchant (e.g. Canadian Tire). There is also an option to enable advertisements 338. Receiving a selection input for the option 338 means that advertisements from the merchant (e.g. Canadian Tire) will be obtained and sent to the mobile device 100. If the option 338 is not selected, then the mobile device 100 is disabled from receiving advertisements from the selected merchant. An scheduling button 339 on the GUI invokes a scheduling screen 365, shown in FIG. 12.

In FIG. 12, the scheduling screen 365 or GUI allows a user to enable the mobile device 100 to receive one or more advertisements at pre-determined times. For example, through a drop-down list 367, a user can enable the mobile device 100 to receive advertisements from the selected merchant on weekdays only, or on weekends only, or according to another customized schedule. The customized schedule can be created by invoking a scheduling or calendar application, upon the mobile device 100 receiving a selection input associated with the "create custom schedule" button 369.

Continuing with FIG. 11, the settings display 335 or GUI may also include an advertisement type control 340 to allow a user to for determine which types of advertisements are to be obtained or displayed by the mobile device 100. A number of option boxes are shown associated with different types of advertisements, such as for example flyers 342, coupons 344 and event sales 346. Selection of an option box indicates that the advertisement application12 will obtain the corresponding type of advertisement. For example, if only the coupons option box 344 is selected, then the advertisement application 12 will only obtain coupon-type advertisements from the merchant Canadian Tire. It can be appreciated that there may be other types of advertisements in addition to those shown.

The settings display 335 also includes a product/service category control 348. A number of option boxes are shown associated with different categories of products/services, such as, for example, home 350 and seasonal 352. It can be appreciated that the product/service categories may be provided by the merchant, as they are dependent on the merchant's offered products or services, or both. If, for example, a user selects the seasonal option box 352, then only advertisements of seasonal products or services, or both, are presented to the user. In this way, the mobile device 100 presents advertisements that are considered relevant to the user. The settings display 335 also includes a frequency control 354 that allows a user to determine how often new advertisements should be obtained, that is if new advertisements are available. A drop-down user interface 356 allows the user to select the update frequency (e.g. all the time, one a day, once a week, etc.).

The settings display 335 also includes a location control 358, in which a user can control the geographical relevance of the advertisements. For example, a user may likely want to obtain advertisements from merchants local to his home location. A user who lives in New York city, NY, United States, for example, may want advertisements from Walmart stores in New York city and may likely not want advertisements from Walmart stores in Toronto, Ontario, Canada. Thus, a user can provide the advertisement application 12 with geographical information that would allow only geographically relevant advertisements to be obtained. A text box 360 allows the user to enter in a postal code, zip code, city, or other geographical information. Alternatively, when the mobile device 100 receives a selection input associated with the settings button 362, another location settings screen 364 is displayed, as shown in FIG. 13. The location settings screen 364 includes option boxes for determining location (e.g. postal code, zip code, city, etc.) by a global positioning system (GPS) 366, and by a home setting 368 already stored on the mobile device 100. It can be appreciated that there are various different methods for determining a relevant location according to a user's perspective, and any of such methods are applicable to the principles described herein. The purpose of determining a relevant location is to obtain advertisements from merchants that are local to the relevant location. In other words, a GUI is provided for selecting the local area associated with at least one advertisement that is obtained by the mobile device, such that, upon receiving a selection input for a selected local area, the mobile device is enabled to receive the at least one advertisement characterized by the selected local area. Further, the selection input for the selected local area may be determined by GPS.

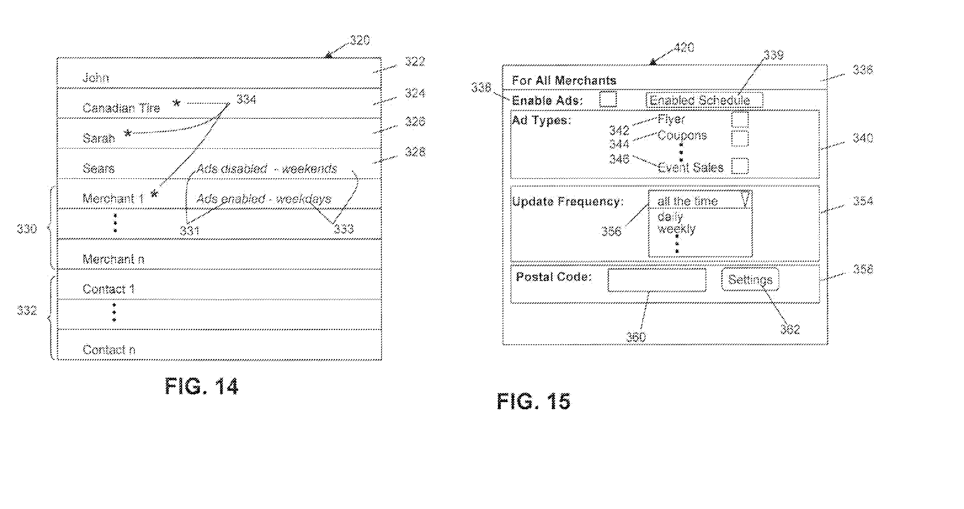

Turning to FIG. 14, another example of a contact list 320 is provided. Associated with each merchant segment is an indicator to notify the user whether or not the mobile device 100 is enabled to receive advertisements from the respective merchant. For example, if the mobile device 100 is enabled to receive advertisements, then on the contact list 320 comprising the entry associated with the merchant, an advertisement enabled indicator 331 would be displayed in association with the entry associated with the merchant. Similarly, if the mobile device 100 is disabled from receiving advertisements, then on the contact list an advertisement disabled indicator 331 would be displayed associated with the entry associated with the merchant. In one example embodiment, the indicator 331 may be the same indicator that changes between an enabled and disabled state. The contact list 320 may also displaying the pre-determined times 333 associated with an entry associated with a merchant. For example, the Sears entry 328 shows that the advertisements are currently disabled, although they are enabled on the weekends.

Turning to FIG. 15, another GUI of an advertisement settings display for all merchants 420 may be provided to allow the user to collectively enable and disable the receipt of advertisements associated with each of the merchants. In other words, if there are multiple entries on the contact list 320 that are associated with a respective one of the multiple merchants, then the user can collectively enable and disable the receipt of advertisements from those merchants listed on the contact list 320. Similarly, scheduling and other filtering options are provided on the GUI to collectively control the advertisements from all merchants.

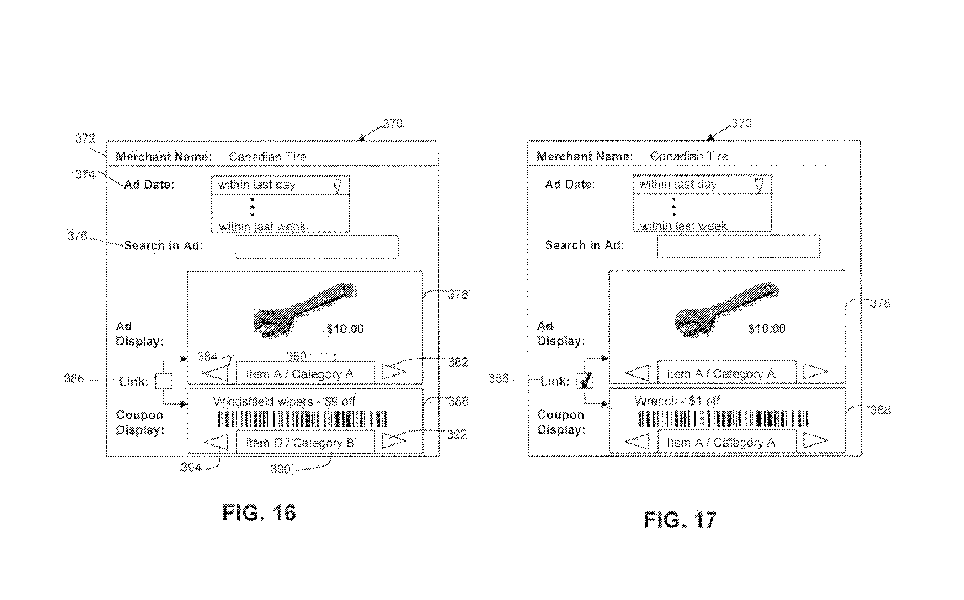

Turning back now to FIG. 10, when the mobile device 100 receives an input selection corresponding to a certain merchant entry on the contact list 320 for displaying advertisements, then the advertising application 12 presents an advertisement display 370 (see FIGS. 16 and 17). The input selection may correspond to a merchant with or without a new advertisement available or, in other words, with or without a new event indicator 334.

An example of an advertisement display 370 is shown in FIGS. 16 and 17. The advertisement display 370 shows the name of the merchant 372 (e.g. Canadian Tire) selected from the contact list 320. The range of dates 374 for the advertisement may also be shown. In the alternative, or in combination, the range of dates 374 may be selected, for example, using a drop-down selection box. Advertisements recent as of the last day or recent as of the last week may be displayed. Thus, older advertisements from the merchant will not be displayed, if so desired. A search box 376 is also provided in the advertisement display 370 that enables the user to search for certain products or services, or categories of products or services. For example, a user can enter a keyword (e.g. tool, auto, household, etc.) into the search box 376 to locate advertisements related to the keyword. An advertisement display segment 378 is included as part of the advertisement display 370. The advertisement display segment 378 may show a description, such as a graphic or text description, or both, of the product or service. The description may also include a price associated with purchasing the product or service. The advertisement display segment 378 may also include an item or category label 380. For example, the picture of the wrench shown in the advertisement display segment 378, may be given the label of "Item: wrench/ Category: tools". In other words, the wrench item belongs to the category of tools. In another example, a windshield wiper item belongs to the category of automotive. Navigation controls 382, 384, allow a user to view different advertised products or services.

A coupon display segment 388 is also included in the advertisement display 370. Coupons provide the user with discounts or savings on certain products and services. The coupons may or may not include bar codes, two-dimensional block codes, letter and number codes, etc. Such codes may be used to authenticate the coupon. A item or category label 390 is included in the coupon display segment 388 to provide the user with the name of the item and the category of the item that is being sold at a discount. Again, another set of navigation controls 392, 394 may be provided to allow a user to scroll through the coupons.

Continuing with FIG. 16, a link option 386 is provided to link the item displayed in the advertisement display segment 378 and link the corresponding coupon displayed in the coupon display segment 377, that is if there is a coupon corresponding to the displayed item. If the link option 386 is not selected, then a user is allowed to navigate the items in the advertisement display segment 378 independently of the items in the coupon display segment 388.

However, turning to FIG. 17, if the link option 386 is selected, then when a user navigates through different items in the advertisement display segment 378, then a coupon for the same item will be displayed in the coupon display segment 388, that is if a coupon for the same item is available. Similarly, the navigation controls 392, 394 can be used to view coupons for different items while simultaneously navigating the description in the advertisement display segment 378. In this way, if a user scrolls through to a coupon (e.g. a coupon for windshield wipers) in the coupon display segment 388, the description of the item (e.g. a picture of a windshield wiper) will be displayed in the advertisement display segment 378.

The displays or screens described herein are just for example. There may be many variations to the configuration and arrangement of information and user interface controls without departing from the spirit of the invention. For instance, the information and the user interface controls may be in a differing order, or may be added, deleted, or modified.

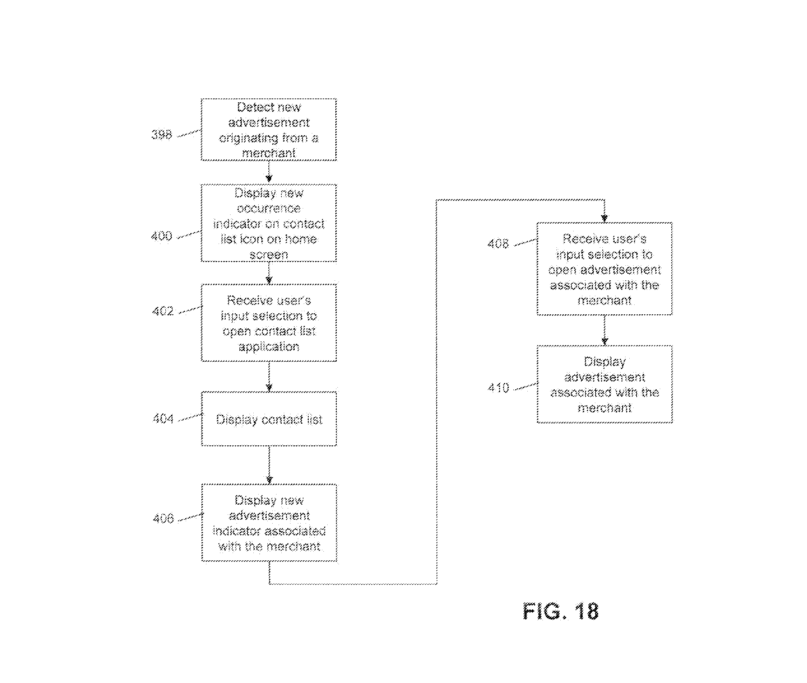

Turning to FIG. 18, a method for accessing and displaying an advertisement is provided, comprising a number of computer executable instructions. At block 398, the mobile device 100 detects a new advertisement from a merchant. At block 400, the mobile device 100 displays a new occurrence indicator on the contact list icon 43 on the home screen 40. At block 402, the mobile device 100 receives the user's input selection to open the contact list application10. At block 404, the mobile device 100 displays the contact list 320. At block 406, the mobile device 100 also displays a new advertisement indicator 334 associated with a merchant. At block 408, the mobile device 100 receives a user's input selection to open the advertisement associated with the merchant. At block 410, the mobile device 100 shows the advertisement display 370 associated with the merchant.

It can be appreciated that blocks 400, 402, and 404 may not be necessary. For example, if the contact list 320 is already being displayed, then the upon detecting the new advertisement (block 398), the new advertisement indicator 334 can be displayed on the contact list entry associated the merchant (block 406).

It can be appreciated that notifying the user with a new occurrence indicator 45 on the home screen 40 and notifying the user with a new event indicator 334 (e.g. new advertisement indicator) associated with a certain merchant entry on the contact list 320, allows the user to decide when to view advertisements associated with a certain merchant. For example, the user may be notified on the home screen 40 that there is a new occurrence (e.g. new message or new advertisement, or both) associated with the contact list 320. However, if the user is busy, he may wait a while until he has time to view the new occurrence. When the user does view the contact list 320, he will be notified which or the contacts have provided a new message, or which of the merchants have provided a new advertisement. Such notification at the contact list 320 is provided by the new event indicator 334. The user may see that there is a new advertisement with a first merchant and a new advertisement with a second merchant, according to the new event indicators 334. However, at that certain time, the user may only interested in the first merchant and may not have any interest in the second merchant. Therefore, without burdening the user with unwanted advertisements, the user can provide an input selection to the mobile device 100 to show only the advertisements from the first merchant. Thus, advertisements from only the first merchant will be shown on the advertisement display 370.

It can thus be readily understood that the different level of indicators (e.g. on the home screen and on the contact list) allows a user to control when to view new advertisements, as well as from which merchants. Thus, advertisements are presented to the user at a time when they are likely to be relevant according to the user's perspective.

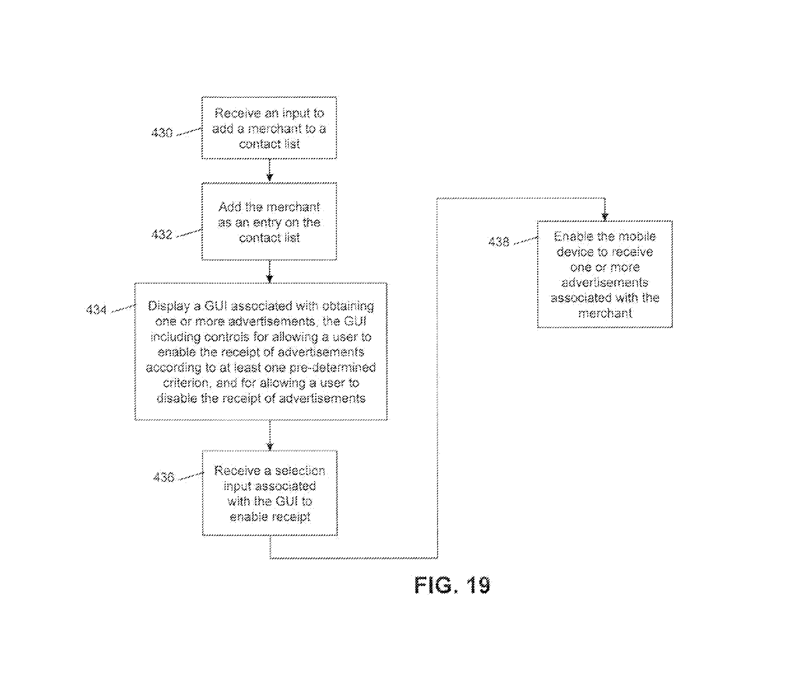

Turning to FIG. 19, a method for obtaining one or more advertisement on a mobile device is provided. At block 430, the mobile device 100 receives an input to add a merchant to a contact list 320. Such an input may include, for example, a selection from a drop down list, an entry of merchant's name or location, or some other input. Upon receiving the input, at block 432, the mobile device 100 adds the merchant as an entry on the contact list 320. At block 434, a GUI associated with obtaining advertisements is displayed. The GUI includes controls for allowing a user to enable the receipt of advertisements according to one or more pre-determined criteria, and for allowing the user to disable the receipt of advertisements. A non-limiting example of such a GUI is shown in FIG. 11. Upon receiving a selection input associated with the GUI, for example, for enabling receipt (block 436), then the mobile device 100 is enabled to receive advertisements that are associated with the merchant (block 438).

It can be appreciated that the combination of a being able to organize merchants on a contact list 320 and being able to control the receipt of advertisements from a particular merchant, provides the user with the opportunity to initiate when the advertisements are viewed. For example, as a user navigates through the contact list 320, the user may not want to view advertisements or notifications of advertisements associated with certain merchant entries at that particular time. Therefore, by enabling or disabling the receipt of advertisements associated with those certain merchants, such advertisements or notifications thereof are not displayed to the user. Further, if the user is not interested in advertisements from certain merchants, the user can choose to disable the receipt of advertisements by the mobile device 100. In this way, data associated with the advertisements is not transmitted to the mobile device 100. Consequently, the mobile device's data and processing resources are not used for unwanted advertisements. It can thus be seen that a user may obtain and view the advertisements upon the user's own initiation, as well as under conditions provided by the user.

The steps or operations in the flow charts described herein are just for example. There may be many variations to these steps or operations without departing from the spirit of the invention. For instance, the steps may be performed in a differing order, or steps may be added, deleted, or modified.

Although the above has been described with reference to certain specific example embodiments, various modifications thereof will be apparent to those skilled in the art without departing from the scope of the claims appended hereto.

## Claims

1. A method of obtaining at least one advertisement on a mobile device, the at least one advertisement associated with a merchant, the method comprising:
- upon receiving an input to add the merchant to a contact list, adding the merchant as an entry to the contact list;
- displaying a first graphical user interface 'GUI' associated with obtaining the at least one advertisement, the first GUI including at least one control to allow a user to enable the receipt of the at least one advertisement according to at least one pre-determined criterion; and,
- upon receiving a selection input associated with the at least one control for enabling receipt, enabling the mobile device to receive the at least one advertisement associated with the merchant.

2. The method of claim 1 wherein the first GUI comprises the at least one control to allow the user to disable the receipt of the at least one advertisement.

3. The method of claim 1 or claim 2 wherein the contact list comprises a plurality of entries each associated with a respective one of a plurality of merchants, and the method further comprising providing a second GUI to collectively enable and disable the receipt of the at least one advertisement associated each of the plurality of merchants.

4. The method of any one of claims 1 to 3 wherein the mobile device is enabled to receive the at least one advertisement at one or more pre-determined times.

5. The method of claim 2 further comprising:
- if the mobile device is enabled to receive the at least one advertisement, displaying, on the contact list comprising the entry associated with the merchant, an advertisement enabled indicator associated with the entry associated with said merchant; and,
- if the mobile device is disabled from receiving the at least one advertisement, displaying, on the contact list comprising the entry associated with the merchant, an advertisement disabled indicator associated with the entry associated with the merchant.

6. The method of claim 4 wherein on the contact list comprising the entry associated with the merchant, displaying the one or more pre-determined times associated with the entry associated with the merchant.

7. The method of any one of claims 1 to 6 further comprising:
- upon detecting a new advertisement from the merchant, displaying, on the contact list comprising the entry associated with the merchant, a new advertisement indicator associated with the entry associated with the merchant; and,
- upon receiving an input selection associated with the entry associated with the merchant, displaying the new advertisement associated with the merchant.

8. The method of claim 7 wherein upon detecting the new advertisement from the merchant, displaying a new occurrence indicator associated with a contact list icon on a home screen, such that, upon receiving an input selection associated with the contact list icon, the contact list is displayed.

9. The method of any one of claims 6 to 8 wherein the new advertisement comprises at least one advertised product or service that is displayed on an advertisement GUI, the advertisement GUI comprising an advertisement display, a coupon display, and a link option for the displays, such that, upon receiving a selection input associated with the link option, the advertisement display displays a product or service and the coupon display displays a coupon for the same product or service.

10. The method of any one of claims 1 to 9 wherein the first GUI is also configured to filter the at least one advertisement that is received by the mobile device.

11. The method of claim 10 wherein the first GUI is also configured to select which types of advertisements are obtained by the mobile device, the types of advertisements comprising flyers, coupons and event sales, such that, upon receiving a selection input to select at least one of the types of advertisement, enabling the mobile device to receive the at least one advertisement **characterized by** the selected types of advertisement.

12. The method of claim 10 or claim 11 wherein the first GUI is also configured to select which product or service categories of advertisement are obtained by the mobile device, such that, upon receiving a selection input to select at least one of the product or service categories of advertisement, enabling the mobile device to receive the at least one advertisement **characterized by** the selected product or service categories of advertisement.

13. The method of any one of claims 10 to 12 wherein the first GUI is also configured to select a frequency at which the at least one advertisement is obtained by the mobile device, such that, upon receiving a selection input for a selected frequency, enabling the mobile device to receive the at least one advertisement at the selected frequency.

14. A computer readable medium comprising computer executable instructions for obtaining at least one advertisement associated with a merchant, the computer readable medium comprising instructions for performing the method according to any one of claims 1 to 13.

15. A mobile device configure to obtain at least one advertisement associated with a merchant, the mobile device comprising a processor and the computer readable medium according to claim 14.

## Amended claims

### Amended claims in accordance with Rule 137(2) EPC.

**1.** A method of obtaining at least one advertisement on a mobile device, the at least one advertisement associated with a selected merchant, the method comprising:
- upon receiving an input to add the selected merchant to a contact list, adding the selected merchant as an entry to the contact list;
- displaying a first graphical user interface 'GUI' associated with obtaining the at least one advertisement, the first GUI including at least one control to allow a user to enable and disable the at least one advertisement associated with the selected merchant according to at least one pre-determined criterion comprising receipt of the at least one advertisement at one or more pre-determined times; and,
- upon receiving a selection input associated with the at least one control for enabling receipt, enabling the mobile device to receive the at least one advertisement associated with the selected merchant.

**2.** The method of claim 1 wherein the contact list comprises a plurality of entries each associated with a respective one of a plurality of merchants, and the method further comprising providing a second GUI to collectively enable and disable the receipt of the at least one advertisement associated each of the plurality of merchants.

**3.** The method of claim 1 further comprising:
- if the mobile device is enabled to receive the at least one advertisement, displaying, on the contact list comprising the entry associated with the selected merchant, an advertisement enabled indicator associated with the entry associated with the selected merchant; and,
- if the mobile device is disabled from receiving the at least one advertisement, displaying, on the contact list comprising the entry associated with the selected merchant, an advertisement disabled indicator associated with the entry associated with the selected merchant.

**4.** The method of claim 1 wherein on the contact list comprising the entry associated with the selected merchant, displaying the one or more pre-determined times associated with the entry associated with the selected merchant.

**5.** The method of any one of claims 1 to 4 further comprising:
- upon detecting a new advertisement from the selected merchant, displaying, on the contact list comprising the entry associated with the merchant, a new advertisement indicator associated with the entry associated with the selected merchant; and,
- upon receiving an input selection associated with the entry associated with the selected merchant, displaying the new advertisement associated with the selected merchant.

**6.** The method of claim 5 wherein upon detecting the new advertisement from the selected merchant, displaying a new occurrence indicator associated with a contact list icon on a home screen, such that, upon receiving an input selection associated with the contact list icon, the contact list is displayed.

**7.** The method of any one of claims 4 to 6 wherein the new advertisement comprises at least one advertised product or service that is displayed on an advertisement GUI, the advertisement GUI comprising an advertisement display, a coupon display, and a link option for the displays, such that, upon receiving a selection input associated with the link option, the advertisement display displays a product or service and the coupon display displays a coupon for the same product or service.

**8.** The method of any one of claims 1 to 7 wherein the first GUI is also configured to filter the at least one advertisement that is received by the mobile device.

**9.** The method of claim 8 wherein the first GUI is also configured to select which types of advertisements are obtained by the mobile device, the types of advertisements comprising flyers, coupons and event sales, such that, upon receiving a selection input to select at least one of the types of advertisement, enabling the mobile device to receive the at least one advertisement **characterized by** the selected types of advertisement.

**10.** The method of claim 8 or claim 9 wherein the first GUI is also configured to select which product or service categories of advertisement are obtained by the mobile device, such that, upon receiving a selection input to select at least one of the product or service categories of advertisement, enabling the mobile device to receive the at least one advertisement **characterized by** the selected product or service categories of advertisement.

**11.** The method of any one of claims 8 to 10 wherein the first GUI is also configured to select a frequency at which the at least one advertisement is obtained by the mobile device, such that, upon receiving a selection input for a selected frequency, enabling the mobile device to receive the at least one advertisement at the selected frequency.

**12.** A computer readable medium comprising computer executable instructions for obtaining at least one advertisement associated with a selected merchant, the computer readable medium comprising instructions for performing the method according to any one of claims 1 to 11.

**13.** A mobile device configured to obtain at least one advertisement associated with a merchant, the mobile device comprising a processor and the computer readable medium according to claim 12.
